# EUROPÄISCHE PATENTANMELDUNG

(11) **EP 1 351 115 A2**
(43) Veröffentlichungstag der Anmeldung: **08.10.2003**
(21) Anmeldenummer: 03004036.4
(22) Anmeldetag: 24.02.2003
(51) Int. Cl.: G06F 1/18

(54) **Anordnung zur Festlegung eines Slotwinkels**

(30) Priorität: 01.03.2002 DE 10209083
(71) Anmelder: Fujitsu Siemens Computers GmbH, 81739 München (DE)
(72) Erfinder: Müller-Augste, Frank, 86399 Bobingen (DE)
(74) Vertreter: Epping Hermann & Fischer

(57) **Zusammenfassung**

Die Erfindung betrifft eine Anordnung zur Festlegung eines Slotwinkels (1), wobei ein Abschnitt (2) des Slotwinkels (1) mittels einer am Computergehäuse (5) schwenkbar angeordneten Slotwinkelfixierung (8) durch Klemmung gegen ein Slotfeld (4) festlegbar ist.

## Beschreibung

Die Erfindung betrifft eine Anordnung zur Festlegung eines Slotwinkels mit im wesentlichen zwei aufeinander senkrecht stehenden Abschnitten an einem Slotfeld eines Computergehäuses, wobei ein Abschnitt des Slotwinkels mittels einer am Computergehäuse schwenkbar angeordneten Slotwinkelfixierung durch Klemmung gegen das Slotfeld festlegbar ist.

Eine derartige Anordnung ist bereits von der Firma Dell bekannt.

Die von der Firma Dell bekannte Slotwinkelfixierung besteht aus einem Hebel, der an einem Ende ein Rastmittel und an dem anderen Ende eine zylindrische Bohrung über die gesamte Breite aufweist. In diese Bohrung wird ein länglich-zylindrisches Stäbchen eingesteckt, so dass der Hebel um die Längsachse des Stäbchens drehbar ist. Das Stäbchen wird dann im Laufe des Vertigungsprozesses fest mit dem Computergehäuse verbunden.

Das Problem dieser Anordnung ist, daß mehrere Teile benötigt werden, wodurch ein hoher logistischer Aufwand entsteht.

Ein weiteres Problem dieser Erfindung ist, dass der Hebel werksseitig montiert werden muss und nachträglich nur schwer ausgewechselt oder entfernt werden kann.

Der Erfindung liegt daher die Aufgabe zugrunde, die Slotwinkel mittels eines schwenkbaren Hebels zu fixieren und dabei sowohl den logistischen als auch den Aufwand, der bei der Montage entsteht, möglichst gering zu halten.

Die Aufgabe wird erfindungsgemäß dadurch gelöst, daß die Slotwinkelfixierung im wesentlichen aus einem festlegbaren Abschnitt und einem schwenkbaren Hebel besteht.

Der Vorteil der Erfindung liegt dabei darin, daß sowohl der schwenkbare Hebel als auch der festlegbare Abschnitt, genauso wie das verbindende Scharnier aus einem Material und an einem Stück geformt sind.

Hierdurch kann sowohl der logistische als auch der produktionstechnische Aufwand extrem niedrig gehalten werden.

Ein weiterer Vorteil ist, dass die Slotwinkelfixierung leicht eingebaut und ausgewechselt werden kann.

Vorteilhafterweise weist der festlegbare Abschnitt der Slotwinkelfixierung ein Rastmittel auf, das in eine entsprechende Gegenrast am Computergehäuse einrastbar ist.

In einer bevorzugten Ausführungsform ist die Verbindung zwischen festlegbarem Abschnitt und schwenkbarem Hebel ein Folienscharnier.

In einer Weiterbildung der Erfindung befindet sich an dem schwenkbaren Hebel ein Rastmittel, das in eine entsprechende Gegenrast am Computergehäuse einrasten kann.

Günstigerweise wird der Hebel so angeordnet, daß er durch Schließen des Computergehäuses mittels eines Deckels verriegelt wird.

Vorteilhafterweise ist der Hebel so konstruiert, daß auf der Seite, die zu dem festzulegenden Abschnitt des Slotwinkels zeigt, federnde Elemente angebracht sind, mittels derer durch Schließen des Gehäusedeckels eine definierte Kraft auf die Abschnitte des Slotwinkels wirkt.

In einer bevorzugten Ausführungsform befinden sich an den Slotfeldern Gewindebohrungen, so daß die Slotwinkel zusätzlich mit einer Schraube gesichert werden können.

Durch die Erfindung können mehrere Slotwinkel mit einem Hebel festgelegt werden.

Nachfolgend wird die Erfindung anhand eines in den Zeichnungen dargestellten Ausführungsbeispiels erläutert.

In den Zeichnungen zeigen:
- Figur 1: eine Schrägansicht der Slotwinkelfixierung,
- Figur 2: die Slotwinkelfixierung in eingebautem Zustand.

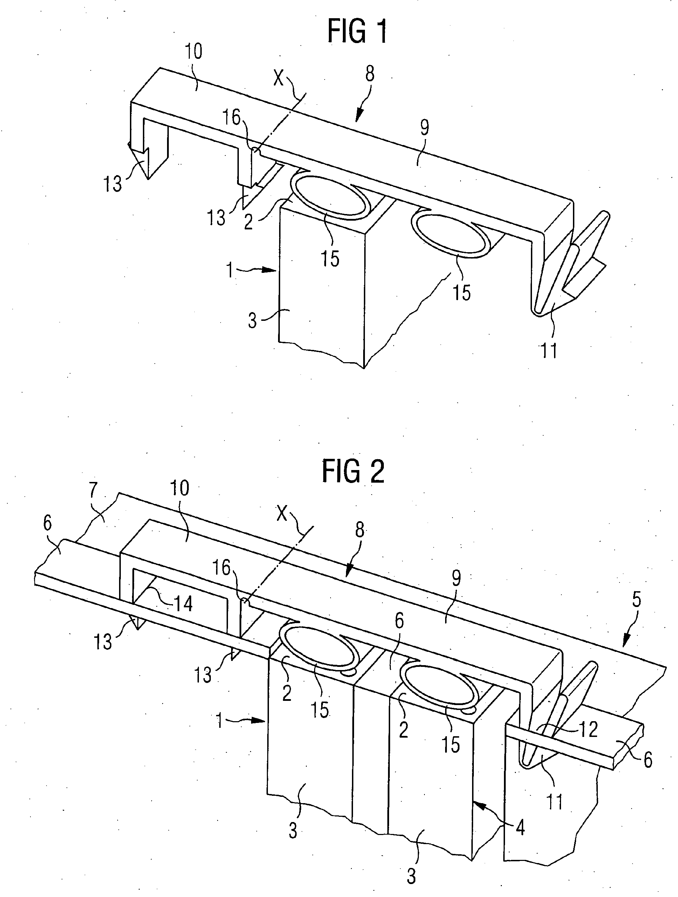

Figur 1 zeigt eine Slotwinkelfixierung 8 mit einem festlegbaren Abschnitt 10, der ein Rastmittel 13 aufweist, einem Folienscharnier 16, das um eine Drehachse X drehbar ist, und einem schwenkbaren Hebel 9, an dessen Ende wiederum ein Rastmittel 11 vorgesehen ist und auf dessen Unterseite zwei federnde Elemente 15 geformt sind.

Figur 2 zeigt die Slotwinkelfixierung 8 in ein Computergehäuse 5 eingebaut.

An einer Seitenwand 7 des Computergehäuses 5 ist eine Auflagefläche 6 angebracht, in der Gegenrasten 14 und 12 ausgebildet sind.

Der festlegbare Abschnitt 10 der Slotwinkelfixierung 8 wird in die Gegenrast 14 mit seinem Rastmittel 13 eingesteckt und dadurch mit dem Computergehäuse 5 verbunden.

Die Schwenkbarkeit des Hebels 9 um die Drehachse X wird durch das Folienscharnier 16 erzielt.

Am Ende des schwenkbaren Hebels 9 befindet sich das Rastmittel 11.

Des weiteren ist in Figur 2 ein Slotfeld 4 mit zwei Slotwinkeln 1, die jeweils einen senkrechten 3 und einen waagerechten 2 Abschnitt aufweisen dargestellt.

Zur Fixierung der Slotwinkel 1 wird der Hebel 9 in Richtung Auflagefläche 6 geschwenkt, so dass die waagrechten Abschnitte 2 zwischen Hebel 9 und Slotfeld 4 geklemmt werden. Der Hebel 9 verrastet mit seinem Rastmittel 11 in der entsprechenden Gegenrast 12 in der Auflagefläche 6.

An der Unterseite des Hebels 9 sind die federnden Elemente 15 angebracht, so daß diese in geschlossenem Zustand des Hebels 9 eine definierte Kraft auf den waagrechten Abschnitt 2 des Slotwinkels 1 in dem Slotfeld 4 ausüben.

In der Auflagefläche 6 befinden sich zwei Gewindebohrungen 17, damit die waagrechten Abschnitte 2 der Slotwinkel 1 zusätzlich mit Schrauben befestigt werden können.

Eine weitere Sicherung des Hebels 9 kann dadurch erzielt weden, dass dieser durch den Deckel des Computergehäuses 5 beim Verschliessen des Computergehäuses 5 niedergedrückt wird.

### Bezugszeichenliste

- 1: Slotwinkel
- 2: waagrechter Abschnitt
- 3: senkrechter Abschnitt
- 4: Slotfeld
- 5: Computergehäuse
- 6: Auflagefläche
- 7: Seitenwand
- 8: Slotwinkelfixierung
- 9: Hebel
- 10: festlegbarer Abschnitt
- 11: Rastmittel
- 12: Gegenrast
- 13: Rastmittel
- 14: Gegenrast
- 15: federnde Elemente
- 16: Folienscharnier
- 17: Gewindebohrung

## Patentansprüche

1. Anordnung zur Festlegung eines Slotwinkels (1) mit im wesentlichen zwei aufeinander senkrecht stehenden Abschnitten (2, 3) an einem Slotfeld (4) eines Computergehäuses (5), wobei ein Abschnitt (2) des Slotwinkels (1) mittels einer am Computergehäuse (5) schwenkbar angeordneten Slotwinkelfixierung (8) durch Klemmung gegen das Slotfeld (4) festlegbar ist,
**dadurch gekennzeichnet, dass** die Slotwinkelfixierung (8) im wesentlichen einen festgelegbaren Abschnitt (10) und einen schwenkbaren Hebel (9) aufweist.

2. Anordnung nach Anspruch 1
**dadurch gekennzeichnet, dass** der festlegbare Abschnitt (10) eine Verrastung (13) aufweist, die mit einer entsprechenden Gegenrast (14) am Computergehäuse (5) festlegbar ist.

3. Anordnung nach Anspruch 1 bis 2
**dadurch gekennzeichnet, dass** der Hebel (9) mittels eines Scharniers (16) mit dem festlegbaren Abschnitt (10) schwenkbar verbunden ist.

4. Anordnung nach Anspruch 1 bis 3
**dadurch gekennzeichnet, dass** am schwenkbaren Hebel (9) ein Rastmittel (11) ausgebildet ist, das mit einer entsprechenden Gegenrast (12) am Computergehäuse (5) oder einem Slotfeld (4) im eingeschwenkten Zustand festlegbar ist.

5. Anordnung nach Anspruch 1 bis 4
**dadurch gekennzeichnet, dass** der schwenkbare Hebel (9) derart ausgestaltet und angeordnet ist, dass bei geschlossenem Computergehäuse (5) durch einen Gehäusedekkel die Slotwinkelfixierung in geschlossener Stellung verriegelt ist.

6. Anordnung nach Anspruch 5,
**dadurch gekennzeichnet, dass** der Gehäusedeckel im geschlossenen Zustand parallel zum eingeschwenkten Hebel (9) angeordnet ist und diesen mit einer Kraft beaufschlagt.

7. Anordnung nach Anspruch 1 bis 6,
**dadurch gekennzeichnet, dass** an der Unterseite des Hebels (9) federnde Elemente angeordnet sind.

8. Anordnung nach Anspruch 1 bis 7,
**dadurch gekennzeichnet, dass** die Slotwinkelfixierung (8) aus verformbaren Material gebildet ist und das Scharnier (16) als Folienscharnier ausgebildet ist.

9. Anordnung nach Anspruch 1,
**dadurch gekennzeichnet, dass** eine Gewindebohrung (17) im Slotfeld (4) vorgesehen ist zur zusätzlichen Befestigung des Slotwinkels (1) mit einer Schraube.

10. Anordnung nach einem der Ansprüche 1 bis 9
**dadurch gekennzeichnet, dass** durch den Hebel (9) mehrere Slotwinkel (1) festlegbar sind.
